# EUROPÄISCHE PATENTSCHRIFT

(11) **EP 3 977 225 B1**
(45) Veröffentlichungstag und Bekanntmachung des Hinweises auf die Patenterteilung: **22.11.2023**
(21) Anmeldenummer: 20726127.2
(22) Anmeldetag: 18.05.2020
(51) Int. Cl.: G05D 1/02

(54) **VERFAHREN ZUR ERSTELLUNG EINER UMGEBUNGSKARTE FÜR DIE VERWENDUNG BEI DER AUTONOMEN NAVIGATION EINES MOBILEN ROBOTERS**
METHOD FOR CREATING AN ENVIRONMENT MAP FOR USE IN THE AUTONOMOUS NAVIGATION OF A MOBILE ROBOT
PROCÉDÉ DE FABRICATION D'UNE CARTE D'ENVIRONNEMENT POUR L'UTILISATION LORS DE LA NAVIGATION AUTONOME D'UN ROBOT MOBILE

(30) Priorität: 29.05.2019 DE 102019207870
(43) Veröffentlichungstag der Anmeldung: 06.04.2022
(73) Patentinhaber: Robert Bosch GmbH, 70442 Stuttgart (DE)
(72) Erfinder: SCHERER, Sebastian, 72074 Tuebingen (DE); STELLMANN, Georg, 71640 Ludwigsburg (DE)
(86) Internationale Anmeldenummer: PCT/EP2020/063784
(87) Internationale Veröffentlichungsnummer: WO 2020/239491

(56) Entgegenhaltungen:
- US-A1- 2013 060 461
- US-A1- 2019 155 296

## Beschreibung

Die vorliegende Erfindung betrifft ein Verfahren zur Erstellung einer Umgebungskarte für die Verwendung bei der autonomen Navigation eines mobilen Roboters in einem kartenbasierten Lokalisierungssystem in einer Logistikumgebung. Weiterhin betrifft die Erfindung ein Computerprogramm zur Durchführung eines solchen Verfahrens, ein maschinenlesbares Speichermedium, auf welchem ein solches Computerprogramm gespeichert ist, sowie ein elektronisches Steuergerät zur Durchführung des Verfahrens.

### Stand der Technik

Derzeit ist es in den Logistikzentren bereits Standard, dass automatisch geführte Fahrzeuge den Warentransport in automatisierter Weise vornehmen. Eine Navigation der Fahrzeugroboter erfolgt in derartigen strukturierten Umgebungen beispielsweise anhand von Markierungen am Boden.

So beschreibt beispielsweise die deutsche Offenlegungsschrift DE 10 2014 100 658 A1 einen Stapelkran, der in Hafenanlagen zum Einsatz kommen kann. Mit diesem Stapelkran können Container gehandhabt werden, wobei ein in Fahrtrichtung verfahrbarer horizontaler Querträger mit einer Krankatze vorgesehen ist, die entlang und quer zur Kranfahrtrichtung verfahrbar ist und heb- und senkbare Lastaufnahmemittel für die Container aufweist.

Als Grundlage für eine Roboternavigation wird oftmals eine Variante des sogenannten SLAM-Algorithmus (*Simultaneous Localization and Mapping*) eingesetzt. Hierbei erstellt der Roboter eine Karte seiner Umgebung und lokalisiert sich gleichzeitig in dieser Umgebungskarte. Für diesen Prozess werden Algorithmen verwendet, die die Position des Roboters relativ zu seiner Umgebung bestimmen. Hierfür kann mit Hilfe einer on-board-Sensorik des mobilen Roboters eine Umgebungsrepräsentation, also eine Karte, erstellt werden. Die Karte bezieht die mit der Sensorik, zum Beispiel Laserscanner (LIDAR) oder Kameras, erfassbaren physikalischen Eigenschaften der Umgebung ein. Die Lokalisierungskarte kann dabei je nach verwendeten Sensoren und Verfahren eine Kombination aus rohen gemessenen Punkten, markanten Punkten (*features*) oder semantischen Objekten (*high level features*) beinhalten. Neben der simultanen Lokalisierung und Kartierung ist es auch möglich, dass die Kartierung und die Lokalisierung in separaten Schritten, gegebenenfalls auch mit Hilfe von verschiedenen Fahrzeugen beziehungsweise mobilen Robotern, durchgeführt werden.

Die US 2013/060461 A1 beschreibt ein Verfahren zur Lokalisierung eines Industriefahrzeugs, wie beispielsweise eines Gabelstaplers. Ein mobiles Objekt, wie beispielsweise eine Palette, kann dabei als dynamische Landmarke in einer Umgebungskarte verwendet werden, um die Position des Fahrzeugs zu bestimmen. Wenn das bewegliche Objekt von dem Industriefahrzeug mittels eines Barcodes oder eines RFID-Tags identifiziert wurde, wird es mit seiner aus einer Datenbank entnommenen bekannte Geometrie in die Karte eingefügt und kann in dieser zukünftig als Landmarke verwendet werden.

In der US 2019/0155296 A1 werden eine Aufladestation für einen mobilen Roboter und ein Verfahren für dessen Navigation beschrieben. Eine Umgebungskartierung erfolgt mittels SLAM, um dem Roboter die Navigation in einem Lagerhaus zu ermöglichen.

### Offenbarung der Erfindung

### Vorteile der Erfindung

Die Erfindung stellt ein Verfahren zur Erstellung einer Umgebungskarte für die Verwendung bei der autonomen Navigation eines mobilen Roboters in einem kartenbasierten Lokalisierungssystem in einer Logistikumgebung bereit, wobei vorhandene Informationen aus einem Warenwirtschaftssystem im Hinblick auf die Position von mobilen Objekten eines Warenwirtschaftssystems mit bekannter Position genutzt und in den Prozess der Erstellung der Umgebungskarte im Rahmen eines Lokalisierungssystems einbezogen werden. Mit diesem Verfahren kann die Lokalisierungsgenauigkeit und die Robustheit von kartenbasierten Lokalisierungssystemen zum Beispiel in einem Hafenszenario verbessert werden, wodurch mittelbar auch die Navigationsqualität eines entsprechenden Roboters, insbesondere eines Transportroboters wie zum Beispiel einem fahrbaren Kran oder einem anderen Fahrzeug, verbessert wird. Unter einem mobilen Roboter kann ferner ein flugfähiger und/oder autonom agierender Roboter, wie beispielsweise eine Drohne, insbesondere ein Multikopter, verstanden werden. Der flugfähige Roboter kann weiterhin als Flugtaxi zum Befördern von Personen bzw. Passagieren ausgebildet sein.

Das vorgeschlagene Verfahren stellt damit eine deutliche Verbesserung bei der Lokalisierung und Navigation in veränderbaren Umgebungen bereit. Herkömmlicherweise ist die Navigation von autonomen Transportrobotern in dem Logistik-umfeld beispielsweise einer Hafenanlage schwierig, da Container in Hafenanlagen häufig bewegt werden und so die Erstellung einer dauerhaften Karte auf der Basis einer Umgebungsrepräsentation erschwert ist. Das vorgeschlagene Verfahren löst dieses Problem, indem die mobilen Objekte, deren Position in einem Warenwirtschaftssystem hinterlegt und damit bekannt ist, in die Erstellung der Umgebungskarte einbezogen werden. Dabei werden vorhandene Informationen aus dem Warenwirtschaftssystems im Hinblick auf die Position von mobilen Objekten des Warenwirtschaftssystems, also beispielsweise Container, Paletten oder andere markante Objekte, genutzt und in den Prozess der Erstellung einer Umgebungskarte im Rahmen eines Lokalisierungssystems einbezogen. Mit Hilfe der Informationen aus dem Warenwirtschaftssystem kann damit beispielsweise erkannt werden, ob es sich bei einem bestimmten Objekt um ein mobiles Objekt handelt. Weiterhin können sich verändernde Positionen von mobilen Objekten direkt in der Umgebungskarte berücksichtigt werden.

Unter einem Warenwirtschaftssystem wird in diesem Zusammenhang ein System verstanden, das die Warenströme im Geschäftsprozess eines Unternehmens abbildet. Wichtig für die Erfindung ist dabei die Warenlogistik des Warenwirtschaftssystems, mit der die Lagerverwaltung organisiert wird. In der Lagerverwaltung sind Informationen über die Positionen von auszulagernden oder einzulagernden Objekten des Warenwirtschaftssystems enthalten. Aus dem Warenwirtschaftssystem können somit Informationen über die Position von beispielsweise Containern oder Paletten oder anderen mobilen Objekten des Warenwirtschaftssystems abgerufen werden. So arbeitet beispielsweise eine Hafenverwaltung in der Regel mit einem Warenwirtschaftssystem, in welchem die Standorte der in der Hafenanlage umgeschlagenen Container in Echtzeit erfasst werden.

Diese Informationen fließen gemäß dem erfindungsgemäßen Verfahren in die Erstellung einer Umgebungskarte, die für die autonome Navigation eines mobilen Roboters genutzt wird, ein.

Das Verfahren ist damit besonders für automatisiert geführte Fahrzeuge (AGV - *Automated Guided Vehicle*), welche beispielsweise Container in Häfen transportieren, mit besonderem Vorteil einsetzbar. Darüber hinaus eignet sich das Verfahren auch für andere automatisierte Fahrzeuge oder andere mobile Roboter, die in einer Logistikumgebung zum Einsatz kommen.

Vorzugsweise handelt es sich bei der Logistikumgebung um eine Hafenanlage. Eine Hafenanlage stellt in der Regel eine besonders dynamische Umgebung dar, da zahlreiche Container im Hafen häufig bewegt und umgestellt beziehungsweise umgeschlagen werden. Hierbei kommen beispielsweise präzise arbeitende Kräne zum Einsatz, die Container oder andere Einheiten aufnehmen, transportieren und an vorbestimmten Positionen abstellen. Diese Umlagerung von Containern wird in der Regel über ein Warenwirtschaftssystem gesteuert. Derartige Kräne oder andere mobile Transportroboter arbeiten beispielsweise auf der Basis einer Laserlokalisation und eignen sich in besonders vorteilhafter Weise für die Anwendung des vorgeschlagenen Verfahrens.

Prinzipiell ist es möglich, dass die Umgebungskarte, die für die Navigation eines mobilen Roboters benutzt wird, ausschließlich auf der Basis von Positionsinformationen zu den mobilen Objekten aus dem Warenwirtschaftssystem erstellt wird. Diese Karte kann kontinuierlich mit den Informationen aus dem Warenwirtschaftssystem abgeglichen werden, sodass sich verändernde Positionen von beispielsweise Containern in der Umgebungskarte zeitnah oder in Echtzeit übernommen werden. Ein mobiler Roboter kann sich in einer solchen dynamischen Karte lokalisieren und präzise navigieren.

In einer besonders bevorzugten Ausgestaltung des Verfahrens kann die Kartierung der mobilen Objekte zusätzlich auf der Basis von Sensordaten des mobilen Roboters erfolgen, wobei die von dem mobilen Roboter detektierten Objekte mit den bekannten Positionsdaten aus den Warenwirtschaftssystem abgeglichen werden, um so eine präzise Umgebungskarte zu erstellen. Vorzugsweise erfolgt dieser Prozess im Rahmen einer simultanen Lokalisierung und Kartierung des mobilen Roboters, insbesondere im Rahmen eines SLAM-Algorithmus.

In einer vorteilhaften Ausgestaltung des vorgeschlagenen Verfahrens wird bei der Erstellung der Umgebungskarte eine dynamische semantische Karte auf der Basis der bekannten Positionen der mobilen Objekte des Warenwirtschaftssystems erzeugt. Hierbei ist es nicht zwingend erforderlich, dass die mobilen Objekte mit Hilfe der Sensorik eines mobilen Roboters kartiert werden. Vielmehr ist es auch möglich, dass diese dynamische semantische Karte ausschließlich auf der Basis der Informationen aus dem Warenwirtschaftssystem erzeugt wird. Der besondere Vorteil hierbei ist, dass die aus dem Warenwirtschaftssystem bekannten, sich verändernden Positionen von Containern oder anderen mobilen Objekten zeitnah oder in Echtzeit in der dynamischen semantischen Karte abgebildet werden können, sodass immer eine aktuelle Umgebungskarte vorliegt, die für eine präzise Lokalisierung und Navigation eines mobilen Roboters genutzt werden kann.

In einer weiteren Ausführungsform des Verfahrens kann es alternativ oder zusätzlich vorgesehen sein, dass bei der Erstellung der Umgebungskarte sowohl eine Kartierung von statischen Objekten als auch eine Kartierung der mobilen Objekte des Warenwirtschaftssystems erfolgt. In dieser Ausgestaltung kann beispielsweise eine klassisch erzeugte Lokalisierungskarte, die zum Beispiel aus einer statischen Karte auf der Basis einer Punktewolke besteht, um eine weitere Ebene erweitert wird, die die dynamischen Objekte des Warenwirtschaftssystems beziehungsweise deren Positionen darstellt. Mobile Roboter oder andere automatisierte Fahrzeuge können damit für ihre Lokalisierung und Navigation eine Kombination aus einer statischen Umgebungskarte und einer dynamischen Umgebungskarte nutzen. Hierbei kann die resultierende Umgebungskarte gewissermaßen zwei Ebenen aufweisen. Eine erste Ebene repräsentiert die statische Umgebungskarte. Eine weitere Ebene repräsentiert die mobilen Objekte des Warenwirtschaftssystems, wobei diese weitere Ebene dynamisch anpassbar sein kann.

In einer weiteren bevorzugten Ausgestaltung des vorgeschlagenen Verfahrens kann eine klassisch erzeugte Lokalisierungskarte, die in herkömmlicher Weise auf statischen Objekten der Umgebung basiert, derart bereinigt werden, dass bei der Erstellung der Umgebungskarte die mobilen Objekte des Warenwirtschaftssystems bei einer Kartierung herausgefiltert werden. Dem liegt zugrunde, dass die Sensorik eines mobilen Roboters herkömmlicherweise nicht zwischen statischen Objekten und mobilen Objekten unterscheiden kann. Bei der Kartierung durch einen mobilen Roboter oder durch ein Kartierungsfahrzeug lässt sich bei herkömmlichen Verfahren daher meist nicht verhindern, dass auch mobile Objekte detektiert werden und dann in die statische Karte aufgenommen werden. Dies führt bei einer Positionsänderung des jeweiligen mobilen Objekts zu Problemen für die Navigation eines mobilen Roboters. Das vorgeschlagene Verfahren löst dieses Problem, indem durch Einbeziehung von Informationen über die bekannten Positionen von mobilen Objekten des Warenwirtschaftssystems diese dynamischen Objekte beispielsweise bereits während eines Kartierungslaufs herausgefiltert und dadurch nicht in die Umgebungskarte eingetragen werden. Die gemäß dem vorgeschlagenen Verfahren erstellte Umgebungskarte spart in dieser Ausführungsform des Verfahrens gewissermaßen die mobilen Objekte für die Erstellung der Umgebungskarte aus, sodass die Navigation eines mobilen Roboters ausschließlich auf den unveränderlichen Positionen von statischen Objekten der Umgebung basiert.

Für die Erstellung der Umgebungskarte kann es vorteilhaft sein, wenn die Positionen der mobilen Objekte in einem Referenzkoordinatensystem projiziert werden. Damit ist es möglich, auch die mobilen Objekte mit dynamischen Positionen in eine kartenähnliche Darstellung umzuwandeln, die mit klassischen Verfahren, wie zum Beispiel einem *Scan-Matching,* zur Lokalisierung eines mobilen Roboters genutzt werden können.

Die Erfindung umfasst weiterhin ein Computerprogramm, das für die Durchführung der beschriebenen Schritte des vorgeschlagenen Verfahrens eingerichtet ist. Ein solches Computerprogramm kann insbesondere im Rahmen eines kartenbasierten Lokalisierungssystems in einer Logistikumgebung, insbesondere in einer Hafenanlage, genutzt werden. Ein solches Computerprogramm kann beispielsweise als zusätzliches Modul eines Warenwirtschaftssystems eingerichtet werden, um die autonome Navigation eines mobilen Roboters, beispielsweise eines autonomen Transportfahrzeugs oder eines verfahrbaren Krans, weiter zu verbessern. Weiterhin umfasst die Erfindung ein maschinenlesbares Speichermedium, auf welches ein solches Computergramm gespeichert ist, sowie ein elektronisches Steuergerät, das zur Durchführung der Schritte des vorgeschlagenen Verfahrens eingerichtet ist.

Die zuvor genannten Vorteile gelten in entsprechender Weise auch für einen insbesondere mobilen Roboter zur Erstellung einer Umgebungskarte für die Verwendung bei der autonomen Navigation. Der mobile Roboter kann ferner als ein flugfähiger und/oder autonom agierender Roboter, wie beispielsweise eine Drohne, insbesondere ein Multikopter, ausgestaltet sein. Der flugfähige Roboter kann weiterhin als Flugtaxi zum Befördern von Personen bzw. Passagieren ausgebildet sein.

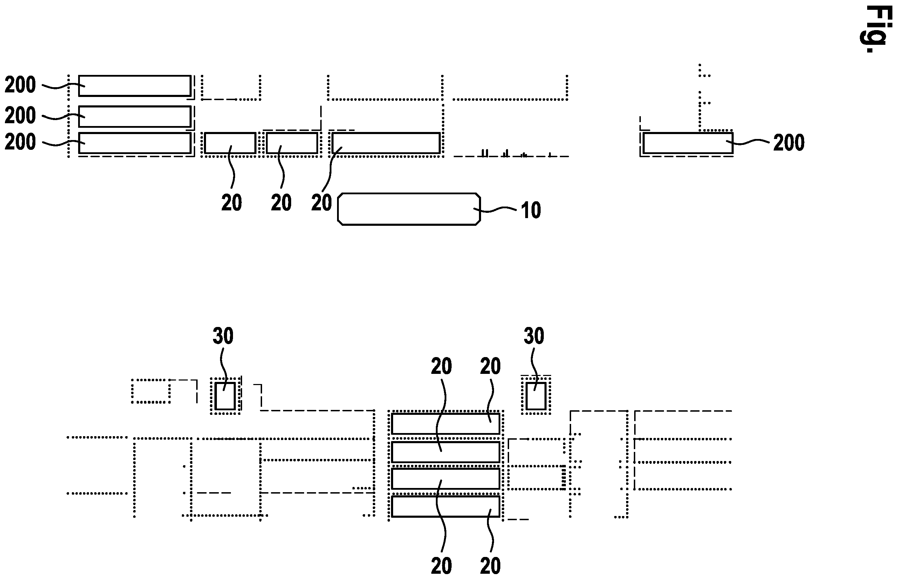

Weitere Merkmale und Vorteile der Erfindung ergeben sich aus der nachfolgenden Beschreibung von Ausführungsbeispielen in Verbindung mit der Zeichnung. Hierbei können die einzelnen Merkmale jeweils für sich oder in Kombination miteinander verwirklicht sein.

In der Zeichnung zeigt die Figur einen aktuellen Laserscan eines autonom navigierenden mobilen Roboters innerhalb der dynamischen Umgebung einer Hafenanlage.

### Beschreibungen von Ausführungsbeispielen

Die **Figur** verdeutlicht die Problematik der Lokalisierung eines autonom navigierenden mobilen Roboters 10 in einer Hafenanlage. Die Hafenanlage ist durch eine sich verändernde Umgebung geprägt, die durch die ständige Umpositionierung von Containern 20, 200 verursacht wird. Die in der Figur schematisch dargestellte Szene basiert im Prinzip auf einem herkömmlichen Verfahren, wonach sich der mobile Roboter 10 in der Hafenumgebung mittels einer statischen Karte, beispielsweise in Form einer Punktewolke (Punkte in ursprünglicher LiDAR-Karte), die durch gepunktete Linien repräsentiert ist, lokalisiert. Der mobile Roboter 10 ist beispielsweise mit Laserscannern ausgestattet und erzeugt einen Laserscan (aktuell gemessene LiDAR-Punkte), hier dargestellt durch eine gestrichelte Linienführung. Zur Lokalisierung können alternativ oder zusätzlich aber auch andere Sensoren, beispielsweise Kameras, an dem mobilen Roboter 10 verwendet werden. Die Lokalisierung und darauf aufbauend die Navigation erfolgt mithilfe eines sogenannten *Scan-Matching.* Die aktuelle Position und Orientierung des mobilen Roboters 10 wird so geschätzt, dass der aktuelle Laserscan (gestrichelte Linienführung) möglichst gut zur Punktwolke der statischen Karte (gepunktete Linienführung) passt. Hierbei kann die statische Karte zum Beispiel aus Punktmerkmalen (z.B. *SIFT-Features-Scale Invariant Feature Transform*) bestehen, die im aktuellen Kamerabild als Korrespondenzen wiedergefunden werden. Die geschätzte Kameraposition und Orientierung wird dann so geschätzt, dass der Rückprojektionsfehler aller Korrespondenzen minimiert wird. Es wird also die Differenz zwischen der erwarteten Position des Punktmerkmals im Bild und in der Position, die wirklich erkannt wurde, möglichst gering gehalten.

Erkennbar im aktuellen Laserscan (gestrichelt) und in der statischen Karte (gepunktet) sind einige Container 20, 200, die in der statischen und dabei veralteten Karte an anderer Stelle stehen als im aktuellen Laserscan. Dabei sind die Container 20 solche Container, die in der ursprünglichen (statischen) Karte vor Ort waren, aber jetzt nicht mehr dort stehen. Die Container 200 sind solche Container, die aktuell vor Ort sind, aber in der ursprünglichen (statischen) Karte nicht vorhanden waren. Dies führt zu Problemen bei der Lokalisierung und Navigation des mobilen Roboters 10. Diese Probleme werden durch das vorgeschlagene Verfahren gelöst, indem die in dem Laserscan des mobilen Roboters 10 detektierten Objekte mit dem verwendeten Warenwirtschaftssystem der Logistikumgebung abgeglichen werden. Dabei wird also das Warenwirtschaftssystem an das Lokalisierungs- oder Kartierungssystem angebunden. Somit kann die Umgebungskarte derart aktualisiert werden, dass die Positionsveränderungen der Container 20, 200 oder anderer mobiler Objekte, deren Position bekannt ist, nachvollzogen und korrigiert werden. Die Umgebungskarte ist damit im Prinzip immer aktuell und es treten keine Probleme bei der Lokalisierung und Navigation des mobilen Roboters 10 auf.

Es kann beispielsweise vorgesehen sein, dass die mobilen Objekte 20, 200, also beispielsweise die Container des Warenwirtschaftssystems, in ein Referenzkoordinatensystem projiziert und damit in eine kartenähnliche Darstellung umgewandelt werden. Diese kartenähnliche Darstellung kann beispielsweise ausschließlich auf der Basis von Informationen aus dem Warenwirtschaftssystem erstellt werden. Diese dynamische semantische Karte, die die aktuellen Positionen der Objekte des Warenwirtschaftssystems beinhaltet, kann zur Lokalisierung und Navigation des mobilen Roboters 10 in an sich bekannter Weise, beispielsweise mittels *Scan-Matching* und der Auswertung von Punktmerkmalen, benutzt werden.

Eine derartige Karte kann weiterhin mit einer klassischen statischen Lokalisierungskarte kombiniert werden, wobei statische Objekte 30 der Umgebung für die Kartenerstellung genutzt werden. Je nach Verfahren können hierfür Punkte oder Punktmerkmale von sowohl einer statischen Karte als auch einer dynamischen Karte akkumuliert werden. Insbesondere können dabei die Positionen der mobilen Objekte 20, 200, also beispielsweise der Container, derart berücksichtigt werden, dass deren Position in der statischen Karte korrigiert wird, indem die aktuelle Position 200 die veraltete Position 20 überlagert.

Weiterhin kann das vorgeschlagene Verfahren im Hinblick auf eine Bereinigung einer klassischen Lokalisierungskarte von dynamischen beziehungsweise mobilen Objekten 20, 200 des Warenwirtschaftssystems genutzt werden. Um die mobilen Objekte 20, 200 während der Datenverarbeitung zur Kartierung herauszufiltern, werden sämtliche Messungen, also beispielsweise Punkte eines Laserscans oder andere visuelle Punktmerkmale, daraufhin überprüft, ob sie einem mobilen Objekt zugeordnet werden können oder nicht. Handelt es sich bei den detektierten Punkten oder Punktmerkmalen um mobile Objekte 20, 200 können die für den Aufbau der statischen Lokalisierungskarte verworfen beziehungsweise herausgefiltert werden. So kann beispielsweise eine statische Karte von Containern 20, 200 bereinigt werden, sodass nur die statischen Objekte 30 für eine Lokalisierung und Navigation des mobilen Roboters 10 genutzt werden.

## Patentansprüche

1. Verfahren zur Erstellung einer Umgebungskarte für die Verwendung bei der autonomen Navigation eines mobilen Roboters (10) in einem kartenbasierten Lokalisierungssystem in einer Logistikumgebung, **dadurch gekennzeichnet, dass** vorhandene Informationen aus einem Warenwirtschaftssystem im Hinblick auf die Position von mobilen Objekten (20, 200) des Warenwirtschaftssystems mit bekannter Position genutzt und in den Prozess der Erstellung der Umgebungskarte im Rahmen eines Lokalisierungssystems einbezogen werden.

2. Verfahren nach Anspruch 1, **dadurch gekennzeichnet, dass** die Logistikumgebung eine Hafenanlage ist.

3. Verfahren nach einem der vorhergehenden Ansprüche, **dadurch gekennzeichnet, dass** die Erstellung der Umgebungskarte auf der Basis von Sensordaten des mobilen Roboters (10) erfolgt.

4. Verfahren nach einem der vorhergehenden Ansprüche, **dadurch gekennzeichnet, dass** die Erstellung der Umgebungskarte im Rahmen einer simultanen Lokalisierung und Kartierung des mobilen Roboters (10) erfolgt.

5. Verfahren nach einem der vorhergehenden Ansprüche, **dadurch gekennzeichnet, dass** bei der Erstellung der Umgebungskarte eine dynamische semantische Karte auf der Basis der bekannten Positionen der mobilen Objekte (20, 200) des Warenwirtschaftssystems erzeugt wird.

6. Verfahren nach einem der vorhergehenden Ansprüche, **dadurch gekennzeichnet, dass** bei der Erstellung der Umgebungskarte eine Kartierung von statischen Objekten (30) durch eine Kartierung der mobilen Objekte (20, 200) des Warenwirtschaftssystems ergänzt wird.

7. Verfahren nach einem der Ansprüche 1 bis 3, **dadurch gekennzeichnet, dass** bei der Erstellung der Umgebungskarte die mobilen Objekte (20, 200) des Warenwirtschaftssystems bei einer Kartierung herausgefiltert werden.

8. Verfahren nach einem der vorhergehenden Ansprüche, **dadurch gekennzeichnet, dass** die Positionen der mobilen Objekte (20, 200) in ein Referenzkoordinatensystem projiziert werden.

9. Computerprogramm, welches eingerichtet ist, die Schritte eines Verfahrens gemäß einem der Ansprüche 1 bis 8 durchzuführen.

10. Maschinenlesbares Speichermedium, auf welchem ein Computerprogramm nach Anspruch 9 gespeichert ist.

11. Elektronisches Steuergerät, das eingerichtet ist, die Schritte eines Verfahrens gemäß einem der Ansprüche 1 bis 8 durchzuführen.

12. Mobiler Roboter (10) mit einem elektronischen Steuergerät nach Anspruch 11.

## Claims

1. Method for creating an environment map for use in the autonomous navigation of a mobile robot (10) in a map-based localization system in a logistics environment, **characterized in that** existing information from a goods management system with respect to the position of mobile objects (20, 200) of the goods management system with a known position is used and is included in the process of creating the environment map within a localization system.

2. Method according to Claim 1, **characterized in that** the logistics environment is a port facility.

3. Method according to one of the preceding claims, **characterized in that** the environment map is created on the basis of sensor data from the mobile robot (10).

4. Method according to one of the preceding claims, **characterized in that** the environment map is created during simultaneous localization and mapping of the mobile robot (10).

5. Method according to one of the preceding claims, **characterized in that**, when creating the environment map, a dynamic semantic map is generated on the basis of the known positions of the mobile objects (20, 200) of the goods management system.

6. Method according to one of the preceding claims, **characterized in that**, when creating the environment map, mapping of static objects (30) is supplemented with mapping of the mobile objects (20, 200) of the goods management system.

7. Method according to one of Claims 1 to 3, **characterized in that**, when creating the environment map, the mobile objects (20, 200) of the goods management system are filtered out during mapping.

8. Method according to one of the preceding claims, **characterized in that** the positions of the mobile objects (20, 200) are projected into a reference coordinate system.

9. Computer program configured to carry out the steps of a method according to one of Claims 1 to 8.

10. Machine-readable storage medium on which a computer program according to Claim 9 is stored.

11. Electronic control unit configured to carry out the steps of a method according to one of Claims 1 to 8.

12. Mobile robot (10) having an electronic control unit according to Claim 11.

## Revendications

1. Procédé de création d'une carte d'environnement pour l'utilisation lors de la navigation autonome d'un robot mobile (10) dans un système de localisation basé sur des cartes dans un environnement logistique, **caractérisé en ce que** des informations existantes provenant d'un système de gestion de marchandises sont utilisées pour ce qui concerne la position d'objets mobiles (20, 200) du système de gestion de marchandises ayant une position connue et sont intégrées dans le processus de création de la carte d'environnement dans le cadre d'un système de localisation.

2. Procédé selon la revendication 1, **caractérisé en ce que** l'environnement logistique est une installation portuaire.

3. Procédé selon l'une des revendications précédentes, **caractérisé en ce que** la création de la carte d'environnement est effectuée sur la base de données de capteurs du robot mobile (10).

4. Procédé selon l'une des revendications précédentes, **caractérisé en ce que** la création de la carte d'environnement est effectuée dans le cadre d'une localisation et cartographie simultanées du robot mobile (10) .

5. Procédé selon l'une des revendications précédentes, **caractérisé en ce que** lors de la création de la carte d'environnement, une carte sémantique dynamique est générée sur la base des positions connues des objets mobiles (20, 200) du système de gestion de marchandises.

6. Procédé selon l'une des revendications précédentes, **caractérisé en ce que** lors de la création de la carte d'environnement, une cartographie d'objets statiques (30) est complétée par une cartographie des objets mobiles (20, 200) du système de gestion de marchandises.

7. Procédé selon l'une des revendications 1 à 3, **caractérisé en ce que** lors de la création de la carte d'environnement, les objets mobiles (20, 200) du système de gestion de marchandises sont éliminés par filtrage lors d'une cartographie.

8. Procédé selon l'une des revendications précédentes, **caractérisé en ce que** les positions des objets mobiles (20, 200) sont projetées dans un système de coordonnées de référence.

9. Programme informatique qui est conçu pour exécuter les étapes d'un procédé selon l'une des revendications 1 à 8.

10. Support de stockage lisible par machine, sur lequel est enregistré un programme informatique selon la revendication 9.

11. Dispositif de commande électronique qui est conçu pour exécuter les étapes d'un procédé selon l'une des revendications 1 à 8.

12. Robot mobile (10) comprenant un dispositif de commande électronique selon la revendication 11.
